# EUROPEAN PATENT APPLICATION

(11) **EP 1 353 289 A1**
(43) Date of publication of application: **15.10.2003**
(21) Application number: 02078897.2
(22) Date of filing: 22.08.2002
(51) Int. Cl.: G06K 7/00, G06F 9/445, H04Q 7/32, G07F 7/08

(54) **System comprising a smart card and a reader**

(30) Priority: 10.04.2002 EP 02076418
(71) Applicant: Schlumberger Systèmes, 92120 Montrouge (FR)
(72) Inventor: Barbe, Serge c/o Schlumberger Systèmes, 92542 Montrouge Cédex (FR); Joffray, Olivier c/o Schlumberger Systèmes, 92542 Montrouge Cédex (FR)
(74) Representative: den Braber, Gerard Paul

(57) **Abstract**

An assembly comprises a card and a reader. The card comprises a functional set of instructions that the reader can execute. The reader comprises a basic set of instructions that causes the reader to retrieve the functional set of instructions from the card.

## Description

### CONTEXT

The invention relates to an assembly that comprises a card and a reader. The card may be, for example, a subscriber identity module (SIM) for a cellular phone network. The reader may be, for example, a reader that can copy data from one SIM card to another SIM card.

### INVENTION

The card comprises a functional set of instructions that the reader can execute. The reader comprises a basic set of instructions, which causes the reader to retrieve the functional set of instructions from the card.

### ADVANTAGE

The invention allows a low-cost reader. The basic set of instructions can be very generic. Any special details, which may differ from one type of card to another, can be in the functional set of instructions that reside in the card. Consequently, the reader can be used for a wide range of different types of cards. Consequently, the reader can be produced in relatively large numbers, which allows economy of scale.

### DETAILS

The functional set of instructions may cause the reader to manipulate data contained in the card. More specifically, the functional set of instructions may cause the reader to carry out a transfer of data between the card and another card that is coupled to the reader.

The card may comprise an indication data that identifies the card as a card that has a functional set of instructions that the reader can execute. Complementary, the reader may have a subset of basic instructions for checking whether the card comprises the indication data or not. More specifically, the indication may data comprises a file that is not foreseen in any application for which the card has been configured. For example, let it be assumed that the card is configured for a cellular phone application in accordance with the GSM standard. In that case, the indication data can be a file that is not present in an ordinary card for this application.

An example of implementation is illustrated by means of the following flow diagram, in which "New SIM" corresponds to the card mentioned hereinbefore and in which SIM copy device corresponds to the reader mentioned hereinbefore.

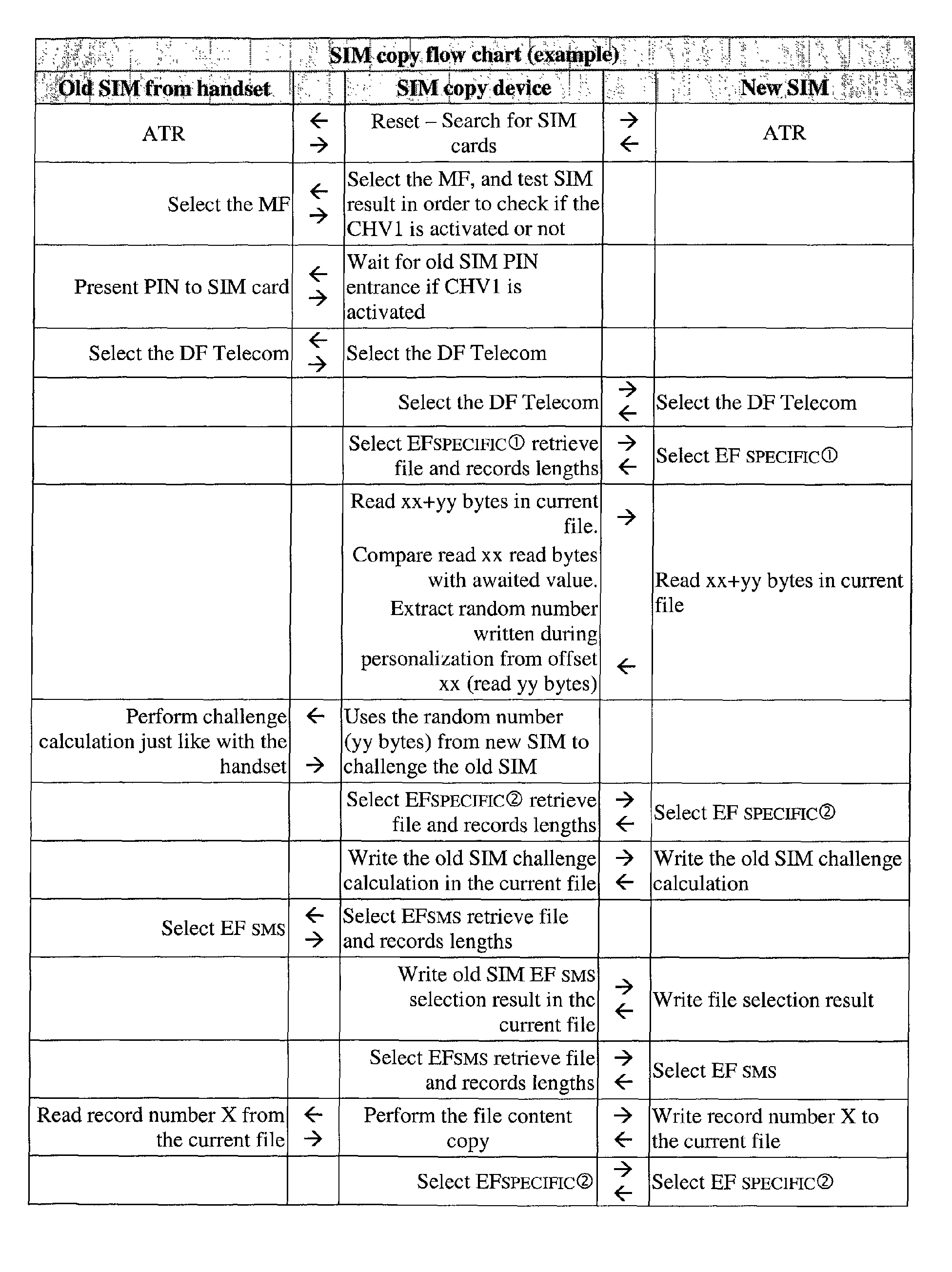

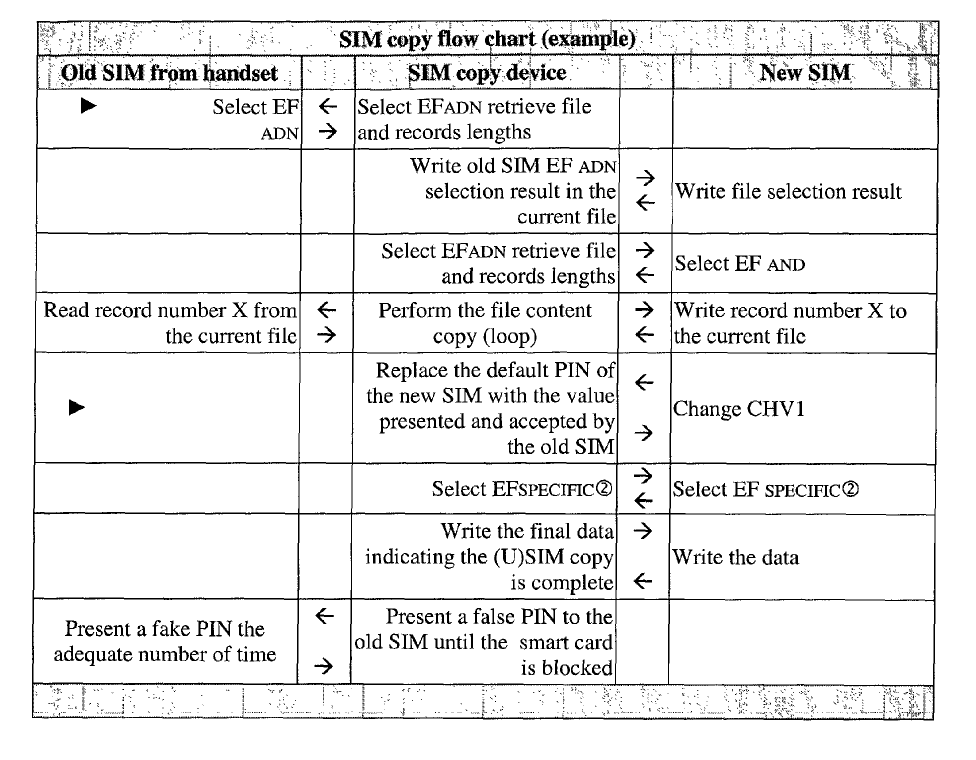

### 1 Piloting the SIM copy device

This chapter describes the APDU required to pilot the SIM copy function in the electronic device.

The manner these commands are coded (byte code) in the new SIM is not the purpose of this document.

### 1.1 Structuring a scripting application

The scripting application of the SIM copy device is made of three types of entity:
1. The commands related to the smart cards.
2. The commands related to the interaction with the user.
3. The messages.

These 3 categories might be combined to have command displaying a message, waiting for an action from the customer, and sending an APDU to a smart card.

The coding of all these elements is fully depending on the device manufacturer choices (i.e. the byte code).

### 1.2 Defining what is a command

A command or function as defined here below is not always a single smart card APDU. It might be a combination of APDUs, and may include user interactions (displaying a message, waiting for a PIN entrance ...).

This document describes the device characteristics for the SIM copy function. Of course, the commands might vary for another application.

### 1.3 Defining what is a message

Messages are defined outside of the commands. Some message might be display under certain circumstances, when an error appends for instance. These messages will be described later on.

The manner a message is coded is not the purpose of this document, and is under the responsibility of the device manufacturer. This principle is applicable to many different circumstances.

For example, it might be interesting to customize messages format depending on the design of the LCD screen. Instead of translating a UNICODE message on the flow to the value to write in the registers of the LCD screen, it is more interesting to pre calculate the correct registers value, then the translation is no more required.

### 1.4 Device reaction when a command fails

Some commands might be mandatory, some other might not.

The distinction is done by adding a parameter to all commands, indicating whether it is mandatory or not.

### Failure on a command not compulsorily successful:

A failure forces the script to jump to next milestone. Milestones are populated over the scripts in order to identify the important steps. Having found the next milestones, the device continues the script execution by executing the next command. If no more milestones are found, treatment applied on compulsorily successful commands is engaged.

### Failure on a compulsorily successful command:

A compulsorily successful command failure induces the immediate termination of the script, displaying the error message.

### Interpreting the smart card status words:

- SW1-SW2 = 90-00 → Continue normally
- SW1-SW2 = 9F-xx → Retrieve xx bytes using the GET RESPONSE command.
- Any other value → Command failure: process to treatment as described here above.

### 1.5 Pre required environment

The commands described here are to be used in scripts. Thus, is required to have some internal variables to store intermediate results. These variables are:
- A → 20 bytes long binary buffer
- B → 20 bytes long binary buffer
- GRR → GetResponse command result

There is no need to be able to perform arithmetic calculations to complete the SIM copy function. By the way, more sophisticated application might require such new commands to be included. There are to be described when needs will occur, but not in this document.

### 1.6 Commands list

The following table briefly describes the commands and their parameters. By the way, most of them require indicating also the following:
- The smart card slot where to apply the command.
- A Boolean value indicating if the command must compulsorily be successful or not.

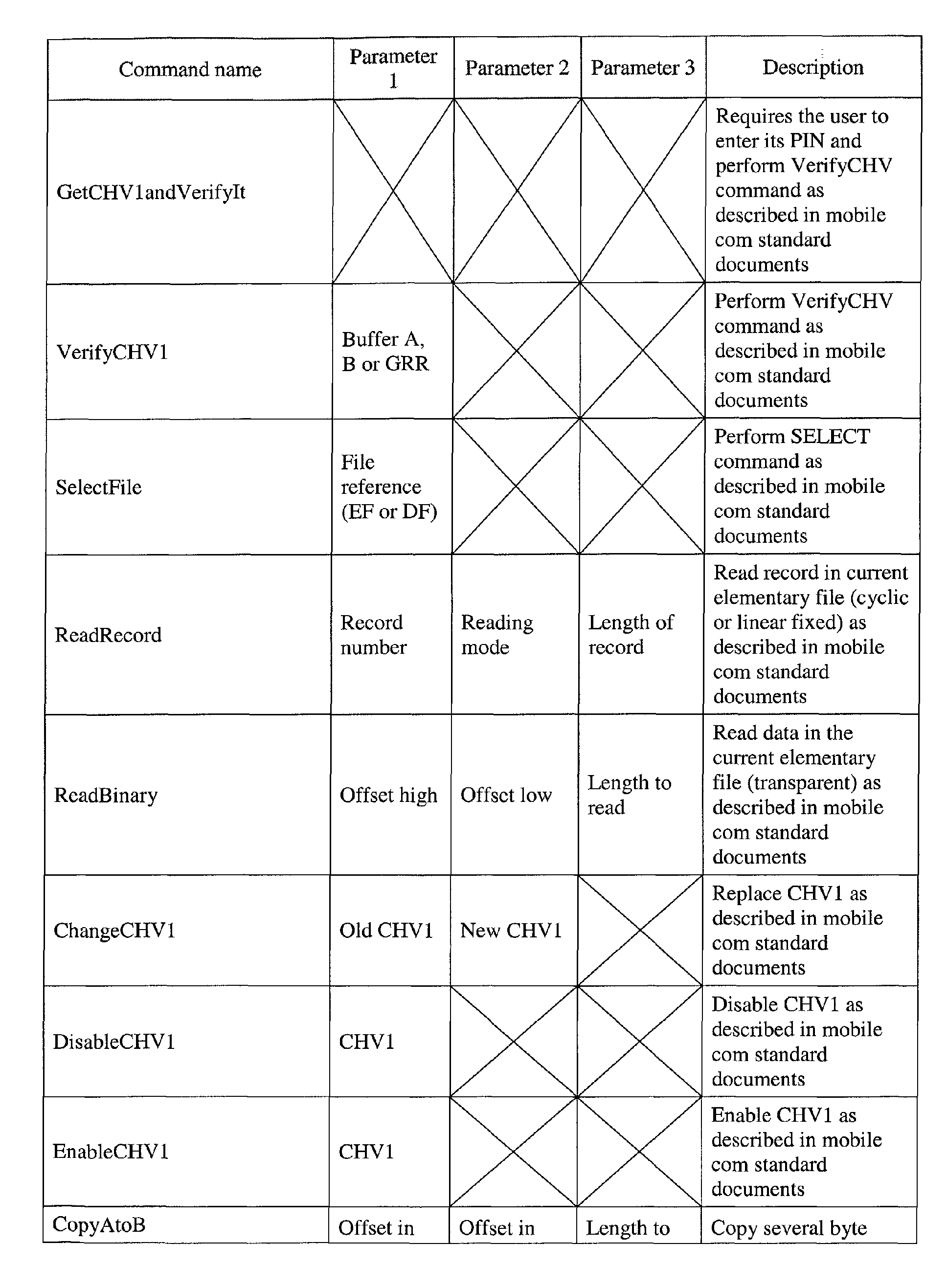

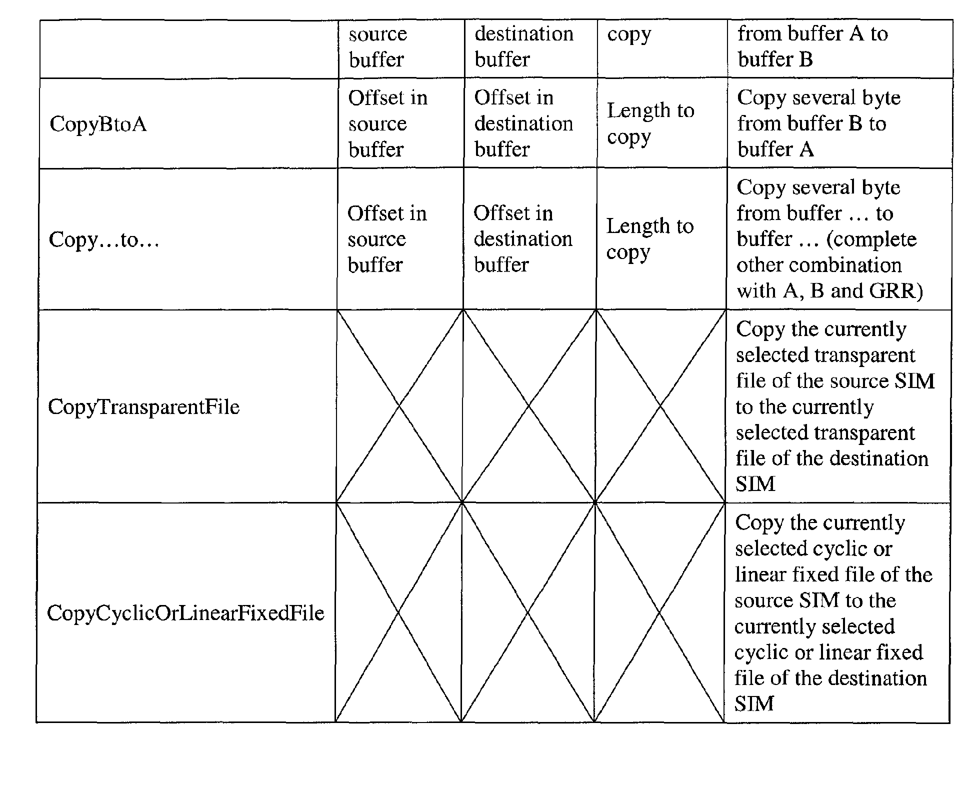

## Claims

1. An assembly comprising a card and a reader, **characterized in that**
- the card comprises a functional set of instructions that the reader can execute; and **in that**
- the reader comprises a basic set of instructions which causes the reader to retrieve the functional set of instructions from the card.

2. An assembly as claimed in claim 1, **characterized in that** the functional set of instructions causes the reader to manipulate data contained in the card.

3. An assembly as claimed in claim 2, **characterized in that** the functional set of instructions causes the reader to carry out a transfer of data between the card and another card that is coupled to the reader.

4. An assembly as claimed in claim 1, **characterized in that** the card comprises an indication data that identifies the card as a card that has a functional set of instructions that the reader can execute, and **in that** the reader has a subset of basic instructions for checking whether the card comprises the indication data or not.

5. An assembly as claimed in claim 4, **characterized** that the indication data comprises a file that is not foreseen in any application for which the card has been configured.
